# EUROPEAN PATENT APPLICATION

(11) **EP 3 919 347 A1**
(43) Date of publication of application: **08.12.2021**
(21) Application number: 20746843.0
(22) Date of filing: 28.01.2020
(51) Int. Cl.: B61L 25/04, B61L 27/00

(54) **TRAIN SECURITY SYSTEM**

(30) Priority: 30.01.2019 GB 201901248
(71) Applicant: Hitachi, Ltd., Tokyo 100-8280 (JP); Hitachi Rail Ltd., London, Greater London EC4M 7AW (GB)
(72) Inventor: MIYAJI, Masayuki, Tokyo 100-8280 (JP); MORITA, Kazuki, London EC4M7AW (GB)
(74) Representative: Mewburn Ellis LLP
(86) International application number: PCT/JP2020/002894
(87) International publication number: WO 2020/158702

(57) **Abstract**

In train control by moving block methods, vehicle onboard devices are required to have a mechanism for monitoring and reporting the formation length and train integrity to a trackside device, and further, high reliability and safety are required for the transmitted information. Accordingly, a train protection system comprises a first vehicle onboard device mounted in a first vehicle at a head of a train formation; a second vehicle onboard device mounted in a second vehicle at the rear of the train formation; and a transmission line configured to connect the first vehicle onboard device and the second onboard device; wherein at least the first vehicle onboard device includes a train integrity monitoring unit, and the train integrity monitoring unit is configured to monitor for establishment or loss of train integrity of the train formation based on communication contents or a communication state of the transmission line.

## Description

### Technical Field

The present invention relates to a train protection (security) system suitable for a moving block method.

### Background Art

The "fixed block method" is a train control method that permits the presence of only one train in a single block section. Accordingly, until now, train detection has been carried out using a track circuit.

In recent years, however, there is a movement to introduce radio communication systems for transmission between vehicle onboard devices and trackside (ground) devices. As a result, this makes it possible to achieve train detection based on the location report from the train, and to reduce the cost of the railway communication system.

In the United States and China, the introduction of a Communication Based Train Control (CBTC) system, which controls trains by radio communication, is underway.

Meanwhile, in the European region, a system called the European Rail Traffic Management System/European Train Control System (ERTMS/ETCS) has been developed and is being introduced. This system aims to improve interoperability by unifying the differing signal systems of each country.

As train protection systems, CBTC and ERTMS/ETCS are primarily composed of vehicle onboard devices and trackside devices that communicate with each other using wireless communication. The vehicle onboard device recognizes the location information of its position by detecting an antenna beacon installed along the track. Based on this location information, train speed information, and travel permission received from the trackside device via wireless communication, speed verification is performed. Then, in the case that the train exceeds the speed limit, the train is controlled by performing brake output.

In train protection systems that use wireless communication, a "moving block method" has been proposed in place of the "fixed block method." This "moving blocking method" is intended for high-density operations, and aims to reduce the equipment of trackside devices.

In the fixed block system, the trackside device detects the location of the train based on information from a train location detection device, such as an existing track circuit or an axle counter.

In contrast, in the moving block system, the following train control is performed, as an example.

The vehicle onboard device reports the train location information and the recognized formation length and train integrity (information indicating that the formation has the formation length that has been reported to the trackside unit) to the trackside device. The trackside device uses the information received from the vehicle onboard device to compute information such as the travel permission for each train. Further, the trackside device transmits this control information to the vehicle onboard devices of the following trains.

By using this moving blocking method, the trackside device can set travel permission for following trains at the rear end of the reported formation. As a result, compared with the fixed blocking method in which only one train can be present in one block section, it is possible to achieve high-density operations, thereby improving transportation capacity.

Further, since the trackside device detects the location of the train based on the information from the vehicle onboard device, it is possible to reduce existing train position detection devices such as track circuits and axle counters.

However, trains in which vehicle onboard devices are mounted are required to have a mechanism for monitoring the formation length and train integrity, and to report this information to the trackside device. Further, high reliability and safety are required for the information transmitted to the trackside device.

In addition, as a means for checking the train integrity, Patent Document 1 (Japanese Patent No. 6086996) proposes to achieve confirmation of train integrity by mounting a mechanism in each vehicle for detecting the linkage between vehicles.

### Citation List

### Patent Literature

Patent Literature 1: The publication of Japanese Patent No. 6086996

### Summary of Invention

### Technical Problem

With regards to confirming train integrity, the proposal disclosed in Patent Document 1 is useful for formations in which the train length of one train changes slightly. That is, it applies to cases such as freight trains, for instance, where frequent connection and disconnection occurs between vehicles, and it is necessary to monitor the train integrity in terms of individual vehicles.

In normal operations such as those of passenger trains, however, the formation is composed of train sets. That is, disconnection between vehicles does not occur in terms of train sets. In the proposal discloses in Patent Document 1, however, there is a problem in that it is necessary to add equipment to each vehicle in the formation, thereby increasing the equipment cost.

### Solution to Problem

The train protection system according to the present invention includes a first vehicle onboard device mounted in a first vehicle at a head of a train formation, a second vehicle onboard device mounted in a second vehicle at a rear end of the train formation, and a transmission line configured to connect the first vehicle onboard device and the second onboard device; wherein a train integrity monitoring unit included by at least the first vehicle onboard device is configured to monitor for establishment or loss of train integrity of the train formation based on communication contents or a communication state of the transmission line.

### Advantageous Effects of Invention

According to the present invention, by using a transmission line mounted on train units to allow vehicle onboard devices to communicate with each other, it is not necessary for trains with existing transmission lines to implement additional equipment. Accordingly, it is possible to achieve monitoring of train integrity with minimal configuration of the train in which the vehicle onboard device is mounted.

In addition, according to the present invention, vehicle onboard devices having fail-safe functions perform checks of prescribed procedures and the integrity of messages. In this way, it is possible to achieve safe and reliable transmission of the train integrity information to the trackside device.

### Brief Description of the Drawings

[Fig. 1] FIG. 1 is a diagram illustrating an example of the overall configuration of a train protection system according to an embodiment of the present invention.
[Fig. 2] FIG. 2 is a diagram illustrating a detailed configuration of a vehicle onboard device and its connection relationship with other devices.
[Fig. 3] FIG. 3 is a diagram illustrating an example of a specific configuration of a fail-safe computing device.
[Fig. 4] FIG. 4 is a diagram illustrating an example of a fail-safe computing device using software collation (data link).
[Fig. 5] FIG. 5 is a diagram illustrating four modes defined for a vehicle onboard device.
[Fig. 6] FIG. 6 is a diagram illustrating an example in which the formation to be managed is composed of one train.
[Fig. 7] FIG. 7 is a diagram for explaining a communication procedure between a vehicle onboard device A and a vehicle onboard device B.
[Fig. 8] FIG. 8 is a diagram illustrating a case in which the train depicted in FIG. 6 is divided.
[Fig. 9] FIG. 9 is a diagram for explaining a communication procedure between a vehicle onboard device A and a vehicle onboard device B in the case of division.
[Fig. 10] FIG. 10 is a diagram illustrating an example in which the formation to be managed is composed of two trains.
[Fig. 11] FIG. 11 is a diagram for explaining a communication procedure in the case of the formation depicted in FIG. 10.
[Fig. 12] FIG. 12 is a diagram illustrating an example in which one-train formations are coupled to each other to constitute one formation.
[Fig. 13] FIG. 13 is a diagram for explaining a communication procedure in the case of the state depicted in FIG. 12.
[Fig. 14] FIG. 14 is a diagram illustrating an example in which a two train formation is decoupled into one-train formations while traveling.
[Fig. 15] FIG. 15 is a diagram for explaining a communication procedure in the case of the state depicted in FIG. 14.
[Fig. 16] FIG. 16 is a diagram illustrating an example in which a two-train formation is divided by vehicles that are not linked vehicles of two train sets.
[Fig. 17] FIG. 17 is a diagram for explaining a communication procedure in the case of the state depicted in FIG. 16.
[Fig. 18] FIG. 18 is a diagram illustrating the relationship between the setting of the master recognition procedure, the coupling recognition procedure, and the operation recognition procedure and the operation state of the vehicle onboard device.

### Description of Embodiment(s)

Hereinafter, embodiments of the present invention will be described in detail with reference to the drawings.

### Embodiment(s)

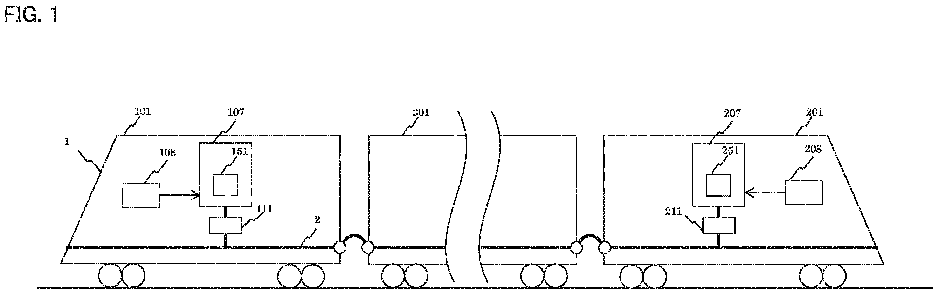

FIG. 1 is a diagram illustrating an example of the overall configuration of a train protection system according to an embodiment of the present invention.

The train 1 is formed by head vehicles 101, 201 at both ends, and one or more intermediate vehicles 301. Depending on the formation of the train 1, the intermediate vehicles 301 may not be provided in some cases. In this case, the train 1 is formed by two vehicles, the head vehicles 101 and 201.

The train 1 includes vehicle onboard devices 107 and 207 in the head vehicles 101 and 201, respectively. The vehicle onboard devices 107 and 207 include train integrity monitoring units 151 and 251 therein.

In addition, the train 1 is provided with selection notification units 108 and 208 for notifying the vehicle onboard devices 107 and 207 of a state selected by the driver or a crew member (hereinafter referred as the "driver or the like") in the cab. Further, the train 1 is connected from the head to the rear end of the train 1 by the transmission line 2, which enables access from the equipment on the train. The train 1 is provided with gateways 111 and 211 as necessary, which serve as interfaces for connecting the vehicle onboard devices 107 and 207 to the transmission line 2.

Here, the transmission line 2 may be used for other purposes, such as connection to other devices mounted on the train 1, as long as this does not interfere with the function of the present invention. In addition, depending on the form of communication adopted by the vehicle onboard devices 107 and 207 and the transmission line 2, the gateways 111 and 211 need not be implemented.

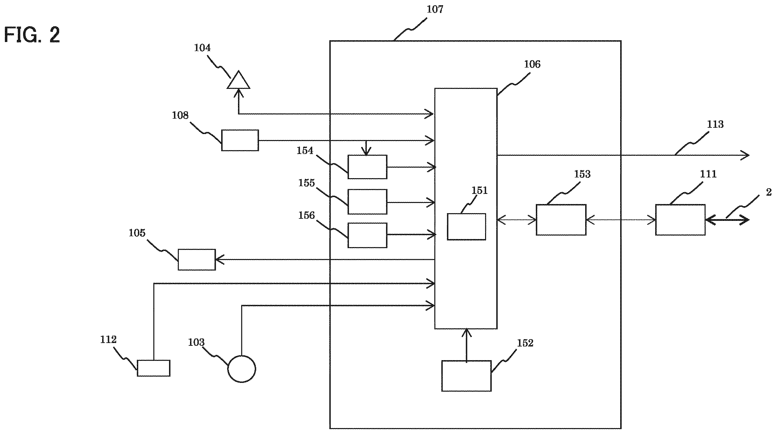

FIG. 2 is a diagram illustrating a detailed configuration of the vehicle onboard device 107 and its connection relationship with other devices. It should be noted that, since the functions of the vehicle onboard devices 107 and 207 are shared, they have at least similar configurations.

The vehicle onboard device 107 internally includes a control unit 106, a database 152, and a communication function unit 153. The train integrity monitoring unit 151 is provided inside the control unit 106. The database 152 stores parameters such as the train length and the IDs of the vehicle onboard devices. The control unit 106 reads necessary data from the database 152 and uses it for control, and also outputs brake commands 113 to the train 1.

The vehicle onboard device 107 performs communication with the transmission line 2 in the train via the communication function unit 153. In the case that the communication specifications of the transmission line 2 and the communication function unit 153 differ, the gateway 111 is implemented.

The speed signal generator 103 outputs a speed signal corresponding to the wheel rotation speed of the train. The selection notification unit 108 outputs a notification signal selecting by the cab. The antenna 112 outputs a detection signal of the antenna beacon (not illustrated in the Figures) installed along the traveling route of the train 1. The vehicle onboard device 107 receives the respective output signals from the speed signal generator 103, the selection notification unit 108, and the antenna 112.

In addition, the vehicle onboard device 107 transmits and receives control information to and from the trackside device (not illustrated in the Figures) via the communication device 104. Further, the vehicle onboard device 107 outputs the vehicle control information to the display unit 105, and displays necessary information to the driver or the like.

Next, the control unit 106 included in the vehicle onboard device 107 will be described.

The control unit 106 uses a fail-safe computing unit as the computing unit. In this way, fail-safe control is ensured. The fail-safe computing device includes a fault detection circuit, which enables the detection of faults and the output of fault detection signals.

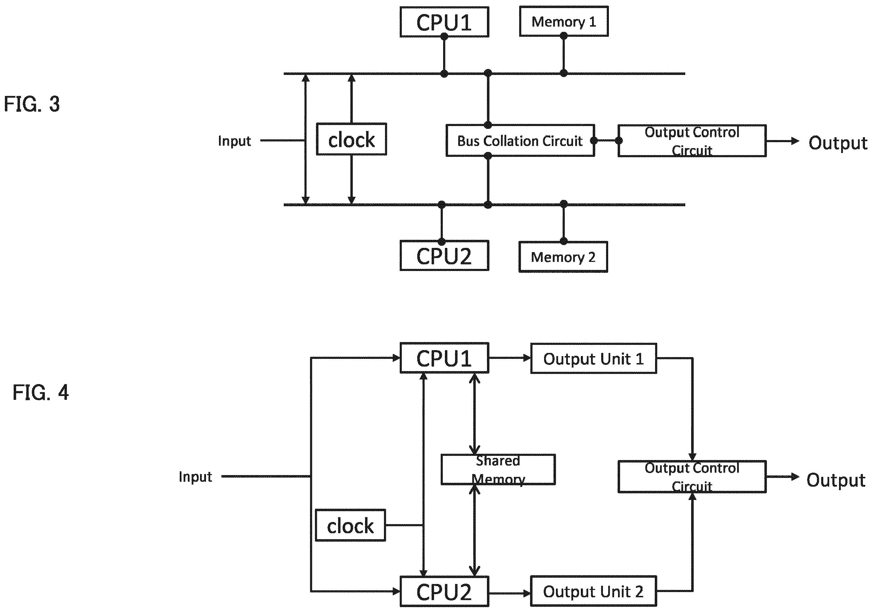

FIG. 3 is a diagram illustrated an example of a specific configuration of the fail-safe computing device.

The fail-safe computing device illustrated in FIG. 3 is a computing device having a plurality of CPUs (CPU1 and CPU2 in FIG. 3) or a CPU having a multiprocessor core and a bus collation circuit.

The bus collation circuit monitors the output signals from the synchronously driven CPU1 and the CPU2 and determines whether or not the output signals from the respective CPUs match. In the case that they match, these signals are output from the output control circuit, and the train control is performed. In the case that they do not match, a failure detection signal is output from the output control circuit.

In addition, it is also possible to implement a software solution, without relying on a hardware configuration such as the bus collation circuit. FIG. 4 is a diagram illustrating an example of a fail-safe computing device using software collation (data link).

In the case that software collation is implemented, for example, each of the CPUs is configured to exchange computation results, and mutually monitor whether or not its own output result matches with the computation result of the other CPUs. The computation result is applied to the control only in cases in which the computation results of all the CPUs match.

For example, as illustrated in FIG. 4, a shared memory is provided between the CPU1 and the CPU2. The CPU1 and the CPU2 respectively verify the computation result written in the shared memory by their partner. In the case that the validity of the computation result can be verified, the computation result is transmitted to each of the output unit 1 and the output unit 2. In the case that the signals from the output unit 1 and the output unit 2 match, the output control circuit operates and the train control is executed.

Similarly, with regard to the reporting of the train integrity from the vehicle onboard devices to the trackside device, high safety is also required. Accordingly, the train integrity monitoring unit of the vehicle onboard device requires high safety.

For this reason, the vehicle onboard device assigns an error detection code to each message. The vehicle onboard device on the receiving side confirms the accuracy of the message by the error detection code of the message. In addition, each message between the vehicle onboard devices includes a data sequence number, information indicating the content of the message, an ID for the vehicle onboard device, and the like based on the transmission procedure, and message generation and reading are performed based on a specific format.

In the case that an error is detected in the message or when inconsistency arises in the procedure obtained from the data sequence number or the message content, the message is discarded by the receiving side vehicle onboard device.

In the case that a specific transmission line is also used for other equipment in the vehicle, in order to prevent misidentification of the communication information from other equipment connected to the transmission line and external spoofing, each message may be encrypted . The key to unlock the encryption is particular to the vehicle onboard device, and the encryption can only be removed by that vehicle onboard device.

Further, the message may be configured to include the time information of the message and the mode of the vehicle onboard device as necessary. In addition, abnormality detection of the messages between vehicle onboard devices may be displayed to a driver or the like through a display unit as necessary.

As described above, by having vehicle onboard devices with fail-safe characteristics monitor communication between themselves, it is possible to achieve high safety with respect to the train integrity monitoring function.

Next, the basic operation of a railway security system using the moving blocking method will be described. In the following, an example will be described in which a driver or the like boards the head vehicle 101 and operates the train.

The vehicle onboard device 107 mounted in the head vehicle 101 detects the antenna beacon (not illustrated in the Figures) installed along the route with the antenna 112, and receives the location information of the antenna beacon. Based on the location information of the antenna beacon, the speed information from the speed signal generator 103, and control information such as the traveling permission obtained from the trackside device via the antenna 112 and the communication device 104, the vehicle onboard device 107 performs the speed check. In the case that the train speed exceeds the speed limit, the vehicle onboard device 107 outputs the brake command 113 to the train 1.

In the case that the movement blocking method is implemented, the vehicle onboard device 107 transmits the location information of the train 1, the total train length and the train integrity information to the trackside device. This train integrity information ensures that the train maintains the specified total train length without being intentionally divided.

Based on the information received from the vehicle onboard device 107, the trackside device sets the traveling permission for the following train at the rear end of the train 1 based on the position information, the total train length, and the train integrity information. Then, the trackside device transmits control information including the traveling permission to the following train. The following train can approach the rear end of the train 1 in response to obtaining travel permission from the trackside device.

In the case that the control unit 106 of the vehicle onboard device 107 detects, from the train integrity monitoring unit 151, that the train integrity of train 1 has been lost, it reports to the trackside device the loss of the train integrity. In response to this report, the trackside device determines that the train 1 has been divided on the route, and determines that safety cannot be verified on this route. As a result, the trackside device instructs the following train to stop updating of the traveling permission, the driver to initiate visual operation to a forward section, or the like.

Since the vehicle onboard devices 107 and 207 recognize that the train integrity of the train 1 is unknown immediately after turning on the power of the vehicle onboard devices 107 and 207 and until operation is started, it is necessary to confirm the train integrity of train 1 at the start of operation and report it to the trackside device. In order to achieve this, the train integrity monitoring units 151 provided in the control units 106 and 206 execute a function for detecting the train integrity.

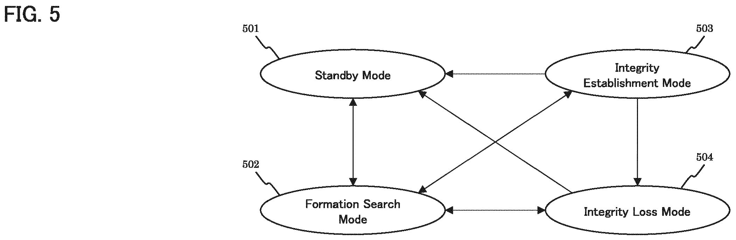

In order to detect the train integrity, the train integrity monitoring units 151 and 251 select the corresponding mode according to the state of the train 1 and the confirmation state of the train integrity. FIG. 5 is a diagram illustrating the four modes defined for the vehicle onboard device.

The standby mode 501 indicates a state in which the train is in a standby state or the like, and train integrity has not been confirmed.

The formation search mode 502 indicates a state in which, before carrying out confirmation of the train integrity, the vehicle onboard device at the front end of the formation confirms the vehicle onboard device at the rear end.

The integrity establishment mode 503 indicates a state in which the front end and the rear end of the formation are confirmed, and the train integrity is established by monitoring using communication.

The integrity loss mode 504 indicates a state in which train integrity has been lost due to division within the train or the like.

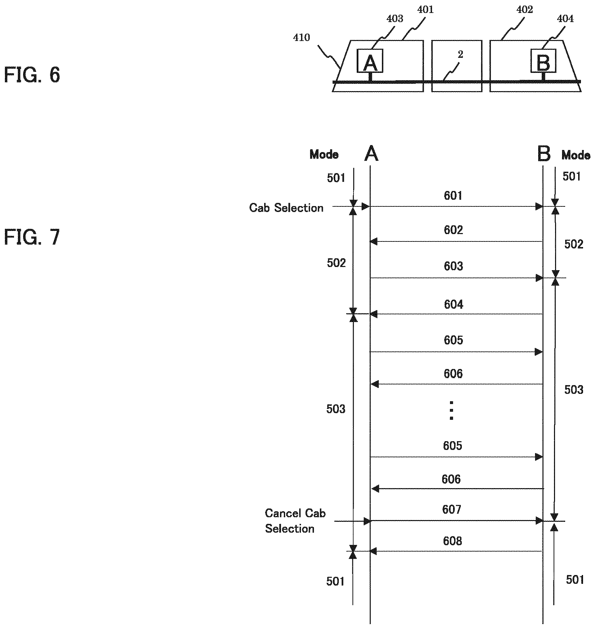

FIG. 6 is a diagram illustrating an example in which the formation to be managed is composed of one train.

At the start of the operation of the train 410, a driver or the like boards the head vehicle in the traveling direction of the train, and selects the cab using a master key or the like. In this case, in the train 410, the vehicle on the side selected by the driver or the like is set as the head vehicle 401, and the mounted vehicle onboard device is set as the vehicle onboard device A (403). Further, the vehicle on the side opposite to the head vehicle 401 in the traveling direction is defined as the rear vehicle 402, and the mounted vehicle onboard device is set as the vehicle onboard device B (404).

FIG. 7 is a diagram for explaining a communication procedure between the vehicle onboard device A (403) and the vehicle onboard device B (404).

Immediately after the power is turned on, or prior to operation, each of the vehicle onboard devices A and B in the train 410 enters into a standby mode 501 when the cab is not selected.

When the driver or the like selects the cab in which the vehicle onboard device A is mounted, the vehicle onboard device A receives a cab operation selection condition from the cab. At this time, the train integrity monitoring unit of the vehicle onboard device A transits to the formation search mode 502.

In the formation search mode 502, the vehicle onboard device A transmits a message 601 to the vehicle onboard devices in the formation via the transmission line 2. The vehicle onboard device B receives the message 601 via the transmission line 2, and the train integrity monitoring portion of the vehicle onboard device B similarly transitions to the formation search mode 502. Then, the vehicle onboard device B transmits a confirmation message 602 via the transmission line 2 with its own ID attached.

In response to receiving the message 602 from the vehicle onboard device B, the vehicle onboard device A recognizes that the vehicle onboard device B is mounted at the rear end of the formation. Subsequently, the vehicle onboard device A transmits a message 603 to the vehicle onboard device B indicating establishment of the formation.

In response to receiving the message 603, the vehicle onboard device B transits to the integrity establishment mode 503, and transmits a message 604 to the vehicle onboard device A indicating its transition to integrity establishment.

In response to receiving the message 104, the vehicle onboard device A transits to the integrity establishment mode 503. After transiting to the integrity establishment mode 503, the vehicle onboard device A transmits the message 605 via the transmission line 2 at a fixed cycle.

The vehicle onboard device B transmits a confirmation message 606 in response to the periodically sent message 605. The vehicle onboard device A confirms the message 606 to be returned in response to the periodically transmitted message 605. As a result, the train within the formation enters a connected state, and the train integrity is established. The train integrity monitoring unit of each of the vehicle onboard device A and the vehicle onboard device B maintains the integrity establishment mode 503.

In the case that operation of the train completes in a state in which train integrity is established, the driver or the like cancels the cab selection. As a result, the vehicle onboard device A stops transmission of the message 605, and transmits a message 607 indicating the suspension of the integrity check via the transmission line 2.

In response to receiving this message 607, the vehicle onboard device B transits to the standby mode 501, and transmits a confirmation message 608 indicating completion of the integrity check to the vehicle onboard device A. In response to receiving the message 608, the vehicle onboard device A transits to the standby mode 501.

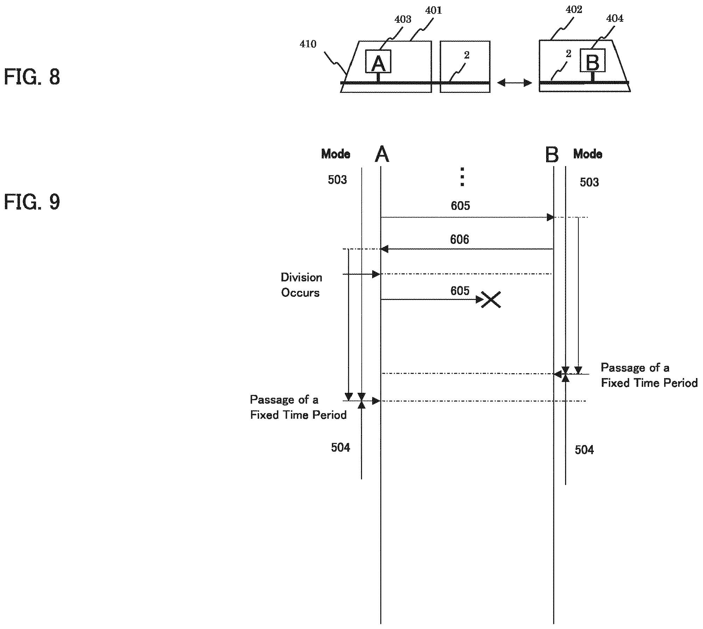

FIG. 8 is a diagram illustrating a case in which the train 410 depicted in FIG. 6 is divided. FIG. 9 is a diagram for explaining a communication procedure between a vehicle onboard device A and a vehicle onboard device B in the case of division.

As shown in FIG. 7, train integrity is established while the train 410 is traveling and before the vehicles are divided.

In the case that the vehicles of the train 410 are while traveling, since the transmission line 2 is also divided, the vehicle onboard device B cannot receive the messages 605 periodically transmitted by the vehicle onboard device A. Accordingly, the vehicle onboard device A cannot receive the confirmation messages 606 from the vehicle onboard device B for a certain period of time. As a result, the train integrity monitoring unit of the vehicle onboard device A determines that the integrity of the train has been lost, and the vehicle onboard device A transitions to the integrity loss mode 504.

In the case of transiting to the integrity loss mode 504, the vehicle onboard device A reports the loss of train integrity to the trackside device in accordance with the regulations of its own vehicle onboard device and the control method. At this time, the loss of the train integrity is notified to the driver or the like through a display unit (the display unit 105 of FIG. 2) installed in the cab.

In addition, since the vehicle onboard device B, as well, cannot receive the messages 605 from the vehicle onboard device A for a certain period of time, the train integrity monitoring unit of the vehicle onboard device B similarly transits to the integrity loss mode 504.

Here, the handling of the vehicle onboard device B mounted in the divided vehicle follows the regulations of the vehicle onboard device and the train operation. However, the vehicle 402 equipped with the vehicle onboard device B hinders the operation of the following train. Accordingly, information regarding the location of the train and the loss of integrity can be reported to the trackside device for the purposes of early implementation of identification of the location of the vehicle and handling of the operation of the route.

In the case that the train 410 stops, the driver or the like performs confirmation through the display unit (the display unit 105 of FIG. 2) in the vehicle onboard device A, and cancels the master key or the like. As a result, the vehicle onboard device A is cancelled from the integrity loss mode 504 and transits to the standby mode 501. For the vehicle onboard device B, as well, the driver or the like performs confirmation through the display unit (the display unit 105 of FIG. 2) and cancels the master key or the like. As a result, the vehicle onboard device B also transits to the standby mode 501.

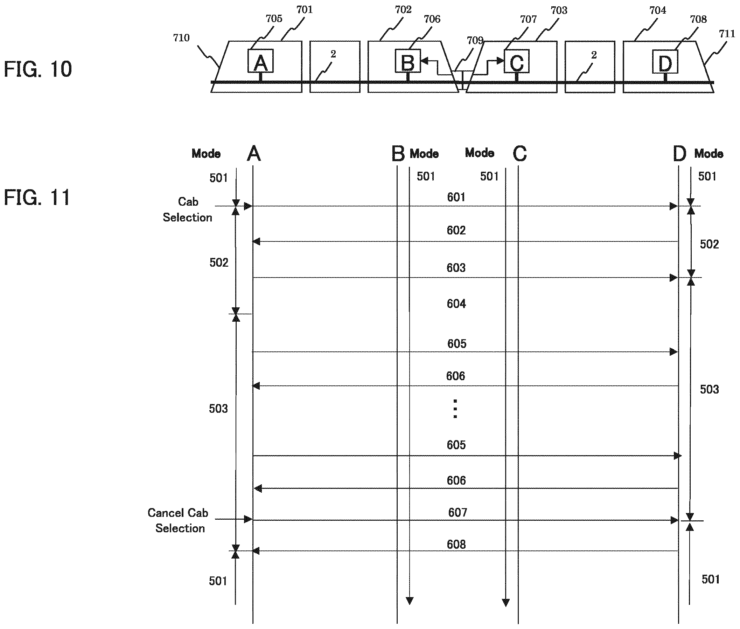

FIG. 10 is a diagram illustrating an example in which the formation to be managed is composed of two trains.

Of the two trains to be linked, each of the train a (710) on the traveling direction side and the train b (711) on the rear end side has the train configuration illustrated in FIG. 1.

As illustrated in FIG. 10, the head vehicle 701 selected by the driver or the like on the front end side of train a is mounted with the vehicle onboard device A (705). The vehicle 702 on the rear end side of train a is mounted with the vehicle onboard device B (706). The vehicle 703 on the front end side of train b is mounted with the vehicle onboard device C (707). On the rear end side of train b, the vehicle 704 at the rearmost end of the train is mounted with the vehicle onboard device D (708).

Train a and train b are linked by the coupler 709 in the vehicle 702 and the vehicle 703. In addition, the transmission line 2 is drawn from the head vehicle of each train to the rear vehicle via the coupler 709, and this enables mutual communication of train information.

In addition, train a and train b include a mechanism for providing notification of the linked state of the vehicle at the time of linkage. In particular, the coupler 709 notifies the vehicle onboard devices of the vehicle 702 and the vehicle 703, each of which has a coupler 709, of the information indicating the vehicle linkage (hereinafter referred to as "vehicle linkage information"). Accordingly, each vehicle onboard device can detect whether or not the vehicles in which a vehicle onboard device is mounted are in a linked state.

FIG. 11 is a diagram for explaining a communication procedure in the case of the formation depicted in FIG. 10.

Similarly to the example illustrated in FIG. 6, when the driver or the like selects the cab, the vehicle onboard device A receives the cab selection condition from the cab, and transitions from the standby mode 501 to the formation search mode 502. At this time, the vehicle onboard device A transmits the message 601 via the transmission line 2 to the vehicle onboard devices in the formation.

The vehicle onboard devices B, C, and D receive the message 601 from the vehicle onboard device A. Among these, since the vehicle onboard devices B and C have received the vehicle linkage information from the coupler 709, the vehicles 702 and 703 cannot be the rear vehicles. As a result, even if the vehicle onboard devices B and C receive the message 601, they ignore the message 601 and maintain the standby mode 501.

In contrast, the vehicle onboard device D transmits, via the transmission line 2, a message 602 to which its own ID is attached. In response to receiving the message 602 from the vehicle onboard device D, the vehicle onboard device A recognizes the vehicle onboard device D at the rear end of the formation.

The vehicle onboard device A transmits the message 603 to the vehicle onboard device D. In response to receiving the message 603, the vehicle onboard device D transits to the integrity establishment mode 503, and transmits the message 604 to the vehicle onboard device A. In response to receiving the message 604, the vehicle onboard device A transits to the integrity establishment mode 503.

As described above, as a result of configuring only the vehicle onboard device D mounted in the rear vehicle to communicate with the vehicle onboard device A, the integrity of the train formation can be established.

In the case that the vehicle onboard device B or C transmits the message 602 or another message to the vehicle onboard device A as a result of some abnormality, the vehicle onboard device A detects the abnormality due to the error in the ID and the procedure of the received message. In this case, the train integrity is not established, and standby mode 501 or integrity loss mode 504 is selected. The subsequent operations are the same as those operations at the time of forming a single train.

Even in the case that the formation is composed of three or more trains, the vehicles in the formation in which the vehicle onboard devices are installed are divided into three types, including the head vehicle and the rear vehicle that are determined to be only one car in the formation, as well as other coupled vehicles. The monitoring of the train integrity can be realized by the same operation as in the above-described two-train formation.

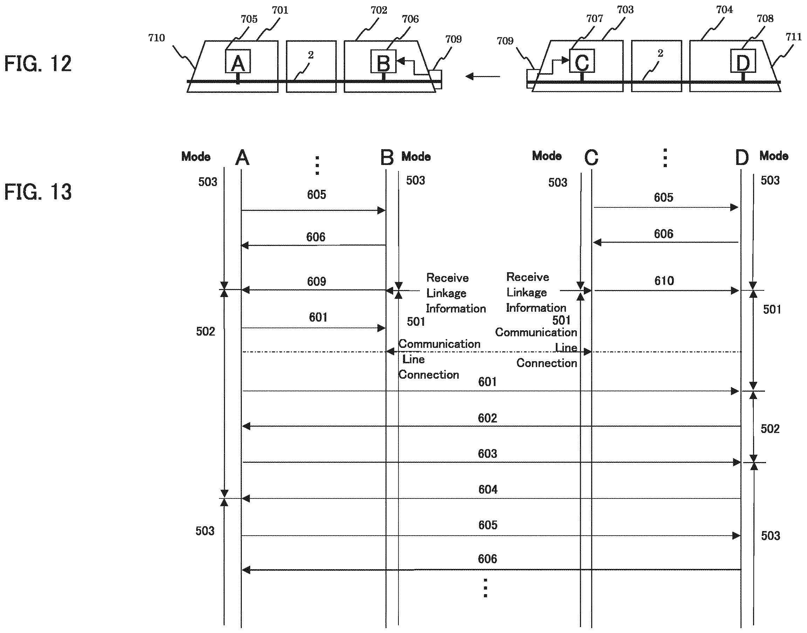

FIG. 12 is a diagram illustrating an example in which one-train formations are connected to each other to constitute one formation.

In the state illustrated in the Figures, each of the two formations maintains train integrity. The formations within the linked trains are the same as in Fig 8. The train 711 approaches the train 710, and at the time of linkage, the vehicles 701 and 703 are selected by the driver or the like.

FIG. 13 is a diagram for explaining a communication procedure in the case of the state depicted in FIG. 12.

Prior to linkage, each vehicle onboard device is in the integrity establishment mode 503. When the train 711 approaches and is linked to the train 710, the vehicle onboard devices B and C obtain the vehicle linkage information from the coupler 709 before the transmission lines 2 of each train are linked.

The vehicle onboard device B transmits, to the vehicle onboard device A, a message 609 that indicates linkage and transits to the standby mode 501. In response to receiving the message 609, the vehicle onboard device A transits to the formation search mode 502 and periodically transmits the message 601 via the transmission line 2 for a certain period of time.

In contrast, the vehicle onboard device C transmits, to the vehicle onboard device D, a message 610 that indicates linkage and transits to the standby mode 501. The vehicle onboard device D receives the message 610 and transits to the standby mode 501.

After the transmission line 2 between the trains is connected, the vehicle onboard device D receives the message 601 from the vehicle onboard device A. The following procedure for establishing the train integrity is the same as the procedure for confirming the train integrity in a formation composed of two trains.

As described above, at the time of linking, train integrity can be confirmed without the intervention of the driver or the like. With regard to the linking of formations composed of two or more trains, as well, monitoring of train integrity can be achieved by the same operation as in the case of the two train formation described above.

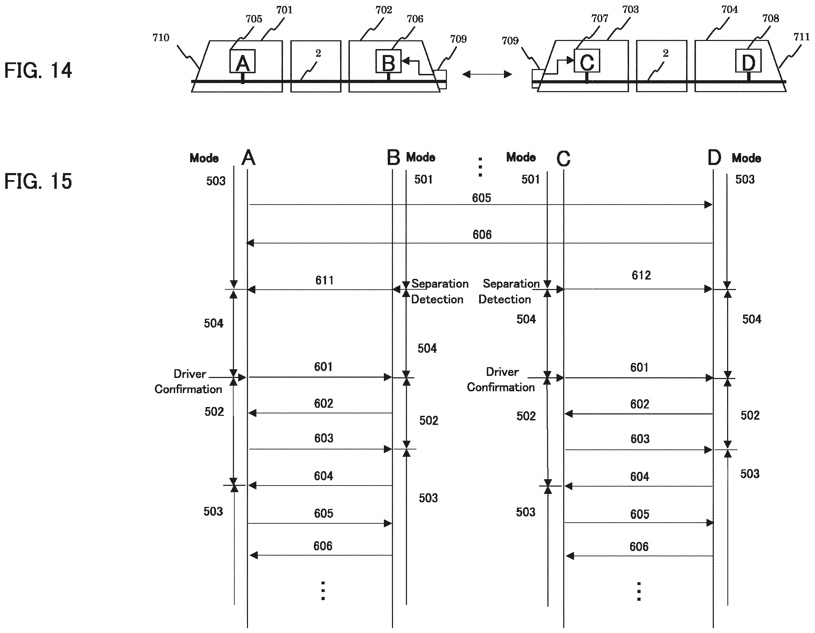

FIG. 14 is a diagram illustrating an example in which a two train formation is separated into one-train formations while traveling. In this case, a case in which one formation is intentionally separated into two trains, and a case in which a formation is divided unintentionally while traveling are included.

FIG. 15 is a diagram for explaining a communication procedure in the case of the state depicted in FIG. 14.

The formation maintains train integrity prior to separation. In the case that the train is separated, the coupler separates, and the vehicle onboard devices B and C will lose the vehicle connection information. As a result, the transmission line 2 between the trains is divided.

In response to the loss of the vehicle connection information, the vehicle onboard device B transmits the message 611 via the transmission line 2. The vehicle onboard device A receives the message 611 from the vehicle onboard device B and transits to the integrity loss mode 504.

The vehicle onboard device A reports the loss of integrity to the trackside device in accordance with the regulations of its own vehicle onboard device. The vehicle onboard device A is unable to determine whether or not the separation of the formation was intentional. Accordingly, the vehicle onboard device A displays the loss of integrity to the driver or the like through the display unit (the display unit 105 in FIG. 2) and requests confirmation.

In the case that the train is stopped or has reached a stop from traveling, based on the confirmation of the driver or the like and the change of the total train length after separation, the vehicle onboard device A cancels the integrity loss mode 504 and transits to the formation search mode 502. However, the integrity loss mode 504 is maintained while the train is traveling.

After transiting to the formation search mode 502, the vehicle onboard device A transmits the message 601 via the transmission line 2. After receiving the message 601, the vehicle onboard device B transmits the message 602 to the vehicle onboard device A. In addition, the communication procedure of the formation having the vehicle onboard devices C and D is similar. Also, the following procedure is the same as the communication procedure in a one train formation.

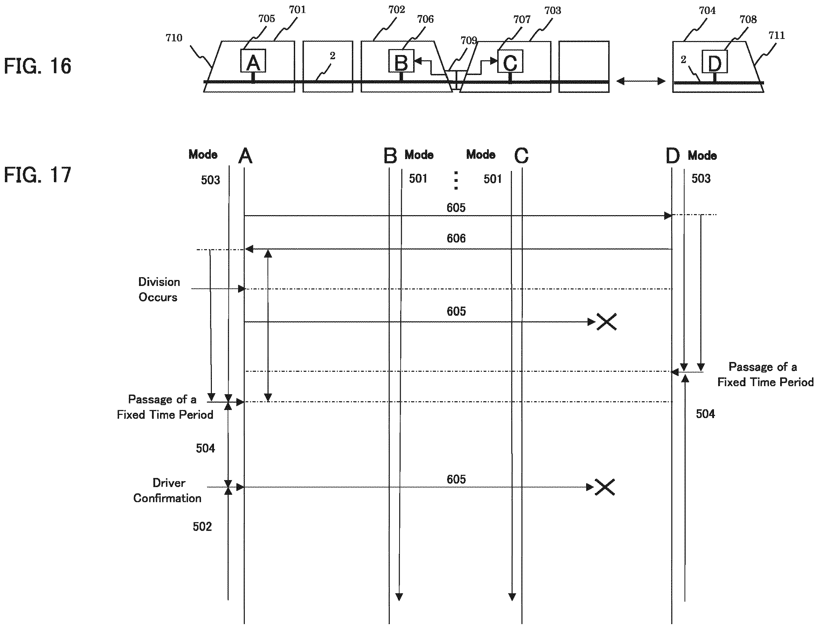

FIG. 16 is a diagram illustrating an example in which a two-train formation is divided by vehicles that are not linked vehicles of two train sets. In the Figures, a case of division by the vehicle 704 of the train 711 is depicted.

FIG. 17 is a diagram for explaining a communication procedure in the case of the state depicted in FIG. 16.

In the case that the division occurs in the train 711 on the rear end side with respect to the traveling direction of the train, as in the case of FIG. 9, since the message 606 from the vehicle onboard device D is not received for a certain period of time, the vehicle onboard device A transits to the integrity loss mode 504.

In addition, since the message 605 from the vehicle onboard device A is not received for a certain period of time, the vehicle onboard device D transits to the integrity loss mode 504. In this case, even if the driver or the like performs confirmation in accordance with the communication procedure illustrated in FIG. 15 and the vehicle onboard device A once again transitions to the formation search mode 502, since the vehicle onboard devices B and C are linked vehicles, the message 605 is discarded. In addition, since the vehicle onboard device D cannot respond because it is divided, train integrity is not established.

In the case that a train mounted with a vehicle onboard device has an automatic driving function and a driver or the like is not required for operation of the train (that is, unmanned driving), an input indicating the state is obtained as the selection state of the vehicle from the head vehicle in the traveling direction. As a result, it is possible to control the selection condition of the cab using the same procedure. In this case, a procedure that requires confirmation from the driver or the like as a result of train division, for instance, can be substituted with an instruction from the trackside device received via wireless communication with the trackside device.

If a malfunction occurs in the vehicle onboard device or the integrity monitoring function, the following procedure is utilized.

In the case that the vehicle onboard device of the head vehicle malfunctions, since the formation cannot be controlled using the vehicle onboard device, the train integrity information is not utilized in the following procedure. Instead, the following procedure will be based on the operation regulations of the route.

When an abnormality, such as the malfunction of the vehicle onboard device of the rear vehicle or division of the communication path (transmission line) occurs, the malfunctioning vehicle onboard device is disconnected from the transmission line and the subsequent messages 606 are not transmitted. For this reason, the head vehicle determines that train integrity has been lost. Since loss of train integrity is reported despite the fact that the train is not divided, inconveniences may arise in operation. However, despite the actual loss of train integrity, the transmission of erroneous information reporting the establishment of train integrity to the trackside device can be avoided. In this case, the malfunction of the vehicle onboard device is confirmed by the driver or the like, and according to the operational regulations, the operation of the subsequent formation is determined.

The functions and modes defined above are used for handling train integrity confirmation functions and train integrity information, the reporting of train integrity to trackside devices, and so on. Accordingly, they do not affect the other functions and control modes related to the control of vehicle onboard devices.

In addition, the cancellation conditions of the integrity loss mode 504 may be modified according to the operational regulations of the vehicle onboard device in the state where the train is divided, the operational rules of the route, or the like. As an example, the reception of confirmation messages from the trackside device in response to reporting the loss of train integrity from the vehicle onboard device to the trackside device and the like can be mentioned.

Next, the relationship between the state of the vehicles that form the train and the operational state of the vehicle onboard devices will be described.

As illustrated in FIG. 2, the vehicle onboard device 107 has at least the following three kinds of recognition procedures. The three kinds of recognition procedures are the master recognition procedure 154, the combination recognition procedure 155, and the command recognition procedure 156. The operation of the train integrity monitoring unit 151 is controlled based on the input contents from these three types of recognition procedures.

The master recognition procedure 154 recognizes the master authority. The combination recognition procedure 155 monitors and recognizes a combination state associated with its own vehicle. The command recognition procedure 156 recognizes whether the train is instructed to operate (in service) for the purpose of travel or not (out of service).

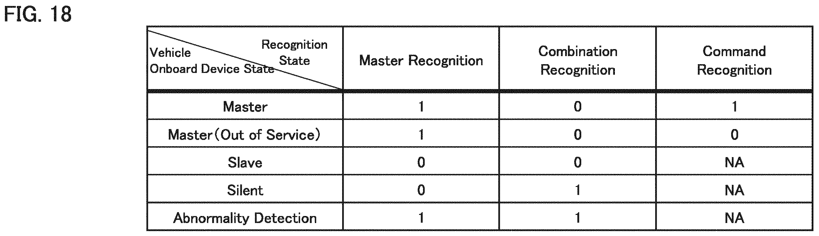

FIG. 18 is a diagram illustrating the relationship between the setting of the master recognition procedure 154, the combination recognition procedure 155, and the command recognition procedure 156 and the operation state of the vehicle onboard device.

In the master recognition column, "1" indicates that the master setting is set, and "0" indicates that the master setting is not set.

In the combination recognition column, "1" indicates a combination state, and "0" indicates an uncombined state.

In the command recognition column, "1" indicates that an operation command has been issued, and "0" indicates that no operation command has been issued (for example, a state in which a command for a replacement operation at a vehicle base or a side line has been issued).

The operational contents of the vehicle onboard device are determined by a combination of input contents (setting content) from each recognition procedure.

If the master recognition is "1," the combination recognition is "0," and the command recognition is "1", then it is recognized that the vehicle onboard device is in an "operational state," a "train rear portion" and a "head vehicle in the traveling direction." Then, the vehicle onboard device operates as a master device (state) and transmits the required messages.

However, even if the master recognition is "1" and the combined recognition is "0," if the command recognition is "0," the vehicle onboard device is in the master device (state) but not in the operational state (out of service).

In the case that the master recognition is "0" and the combination recognition is "0," the vehicle onboard device receives a message from another vehicle onboard device which is the master device (state), or recognizes another vehicle in the same train is in the master state, and thereby operates as a slave device (state). That is, the vehicle onboard device recognizes that it is in the "train rear portion" and the "rear vehicle in the traveling direction." As a result, the vehicle onboard device transmits response messages in response to messages transmitted from another vehicle onboard device that is the master device (state).

In the case that the master recognition is "0" and the combination recognition is "1," the vehicle onboard device recognizes that its own vehicle is in the operational state and is arranged as an intermediate vehicle. That is, the vehicle onboard device operates as a silent device (state), and as long as the combination recognition is "1," does not respond to messages sent from other vehicle onboard devices that are the master device (state) or slave devices (states).

The three states described above are the basic operations of the vehicle onboard devices in the operational state.

It should be noted that, although there are other combinations of input contents (setting contents) for each of the recognition procedures, as a general rule, they are processed as abnormality detection states. For example, in a case in which the master recognition is "1," the combination recognition is "1," and the command recognition is "1," this is handled as an abnormality detection state, with the exception of special cases in which the driving operations are executed from an intermediate vehicle of the train.

In addition, a case in which the command recognition is "0" is only possible to be set when a train is located at a vehicle base or a side line and a modification operation such as a formation combination or a formation division is performed. Furthermore, it is important to note that when setting the command recognition setting from "0" to "1," in particular, it is necessary to enhance safety precautions. That is, it is desirable that a confirmation operation by the driver or the like, inclusion of communication with trackside devices, and stopping of the train be required conditions in the switching operation procedure.

Next, details of each recognition procedure will be described.

### (A) Master Recognition Procedure 154

The master recognition procedure 154 includes a function for providing an instruction of a master setting or a non-master setting to the control unit 106 of the vehicle onboard device 107. In order to achieve this, it is possible to use, for example, a master key for operating the cab, a dedicated button installed in the cab, a biometric authentication device, or a dedicated configuration screen displayed on a display unit provided in the cab.

In addition, the master recognition procedure 154 operates when the driver or the like boards the train and selects a cab to be operated. In response to receiving an instruction input from the driver or the like, the master recognition procedure 154 recognizes that its own vehicle onboard device is the master device (state) based on the master setting instruction. Here, when the train is in an unmanned operation state or the like, a configuration is also possible in which the master setting instruction is output when the cab in the traveling direction of the train is determined based on the instructions from the trackside device.

An operation mode of the vehicle onboard device serving as the master device (state) will be described with reference to the example illustrated in FIG. 6. The vehicle onboard device A is in the standby mode 501 at startup. By outputting the master setting command by the master recognition procedure 154, the vehicle onboard device A can transition to the formation searching mode 502 and transmit the message 601 as the master device (state).

Among the vehicles constituting the train formation, only the vehicle onboard device of one vehicle is permitted to set the master recognition to "1." The master recognition instruction is provided only to one vehicle in the formation using an interlock or the like with respect to the vehicle. In contrast, other vehicle onboard devices that received a message from the vehicle onboard device that is serving as the master device (state) prohibit the operation of their own master recognition procedures 154. In this way, control can be performed to prevent a plurality of master devices (states) from occurring within the formation.

In the case that a train that is in an operating state is required to cancel a combination or initiate a new combination, (put differently, when it is necessary to a switch a vehicle onboard device serving as a slave device (state) or a silent device (state) to the master device (state)) it is desirable to enable setting of the master device (state) by a specially designated procedure. For example, there is a method of temporarily switching the command recognition to "0" and performing a portion of the procedure (including communication with the trackside device) that is executed at the beginning of operation of the train.

### (B) Combination Recognition Procedure 155

The combination recognition procedure 155 has a function for providing notification of the combination state to the control unit 106 of the vehicle onboard device 107. For example, the combination recognition procedure 155 may be connected to an output line of a physical detection means (not illustrated in the Figures) for detecting a linked state of the coupler 709, or an output line of an electric coupler (not illustrated in the Figures) for forming a transmission line with another formation. In addition, the combination recognition procedure 155 may also be connected to a transmission line for acquiring the operational state of the coupler or the electric coupler installed at the end of the physical detection means. Furthermore, the control unit 106 may be provided with a program for checking the control values in the combination state.

Here, in the case that the combined recognition means 155 is configured as hardware, it is configured to collect the state signals of those devices related to the combination, and recognize the combination state based on the output of the state signals of the devices. For example, when utilizing the operation state of the coupler to recognize the combination state, when the coupler detects a signal output from another formation, the combination recognition becomes "1," and when the detection disappears, the combination recognition becomes "0." The process of setting the combination recognition to "0" may be verified by the confirmation of the driver or the like.

### (C) Command Recognition Procedure 156

The command recognition procedure 156 includes a function for recognizing whether or not a vehicle is in an operational state at the present time, and this function is executed through a combination of a plurality of devices and procedures. That is, the command recognition procedure 156 constitutes a portion of the procedure for initiating the train operation, for example, corresponds to a portion or all of the operations such as the driver's confirmation of the line section, the configuration of the total train length, the operation commands from the trackside devices, or the like, and works in conjunction with these settings and the confirmation of these operations.

As a specific example, in the case that the command recognition procedure 156 collects the settings of the switching mode, when the driver or the like sets a switching mode at the time of initiating the train operation, a signal for confirming this setting is output with respect to the command recognition procedure 156. The command recognition means 156 shifts the command recognition from "0" to "1" based on the confirmation of the setting of the switching mode. At this time, a display for confirming whether or not the command recognition can be switched may be output to a display unit included in the vehicle onboard device that serves as the master device (state).

As described above, with respect to the three recognition procedures, in order to execute each recognition operation, a hardware implementation by means of physical devices, or a software implementation by a program executed by the control unit 106 are possible.

### List of Reference Signs

1, 410, 710, 711: train, 2: transmission line, 101, 401, 401, 701, 703: head vehicle, 201, 102, 702, 704: rear vehicle, 301: intermediate vehicle, 103: speed signal generator, 104: communication device, 105: display unit, 106: control unit, 107, 207, 403, 404, 705, 706, 707, 708: vehicle onboard device, 709: coupler, 108, 208: selection notification unit, 111, 211: gateway, 112: antenna, 113: brake command, 151, 251: train integrity monitoring unit, 152: database, 153: communication function unit, 154: master recognition procedure, 155: combination recognition procedure, 156: command recognition procedure, 501: standby mode, 502: formation search mode, 503: integrity establishment mode, 504: integrity loss mode

## Claims

1. A train protection system comprising:
a first vehicle onboard protection device mounted in a first vehicle at a head of a train formation;
a second vehicle onboard protection device mounted in a second vehicle at a rear end of the train formation; and
a transmission line that connects the first vehicle onboard protection device and the second vehicle onboard protection device,
wherein
at least the first vehicle onboard protection device includes a train integrity monitoring unit, and
the train integrity monitoring unit monitors for establishment or loss of train integrity of the train formation based on communication contents or a communication state of the transmission line.

2. The train protection system according to claim 1, wherein
the train integrity monitoring unit includes:
a first mode that indicates a state in which the second vehicle onboard protection device is confirmed as a part of the train formation;
a second mode that indicates a state in which the train integrity is established based on communication contents of the transmission line with the second vehicle onboard protection device that is confirmed as a part of the train formation; and
a third mode that indicates a state in which the train integrity is lost based on communication contents or a communication state of the transmission line.

3. The train protection system according to claim 2, wherein
the train integrity monitoring unit:
transits to the first mode in response to the first vehicle onboard protection device detecting that the first vehicle is the head in a traveling direction;
transits to the second mode in response to the first vehicle onboard protection device recognizing, based on communication contents or a communication state of the transmission line, another vehicle onboard protection device in the train formation; and
transits to the third mode in response to the first vehicle onboard protection device detecting, based on communication contents or a communication state of the transmission line, a division between vehicles in the train formation.

4. The train protection system according to any one of claims 1 to 3, wherein at least the first vehicle onboard protection device including the train integrity monitoring unit executes its own computation using a fail-safe computation unit.

5. The train protection system according to any one of claims 1 to 4, wherein polling and error detection codes are used in communication on the transmission line.

6. The train protection system according to any one of claims 1 to 5, wherein
a new train formation is configured by linking a plurality of the train formations, the respective transmission lines of the plurality of train formations are connected, and
establishment or loss of the train integrity in the new train formation is monitored based on communication contents or a communication state of the transmission line between the first vehicle onboard protection device of the train formation on a traveling direction side and the second vehicle onboard protection device of the train formation on a rear end side.

7. The train protection system according to claim 6, wherein
among the second vehicle onboard protection device and the first vehicle onboard protection device that belong to the plurality of train formations, the second vehicle onboard protection device mounted in the second vehicle for which the linking is performed and the first vehicle onboard protection device mounted in the first vehicle capture information for the linking and recognize that they are intermediate vehicles, and
the intermediate vehicles are excluded as targets of the monitoring for establishment or loss of the train integrity in the new train formation.

8. The train protection system according to any one of claims 2 to 5, wherein when a train formation formed by linking the plurality of train formations is modified by separation, the first vehicle onboard protection device cancels the third mode based on confirmation by a crew member and a change of a total train length as a result of the separation.

9. The train protection system according to any one of claims 1 to 8, wherein
the train formation includes unmanned autonomous operation functionality, and
the first vehicle onboard protection device monitors for establishment or loss of the train integrity in response to an instruction from a ground device.
